# EUROPEAN PATENT SPECIFICATION

(11) **EP 2 349 673 B1**
(45) Date of publication and mention of the grant of the patent: **07.11.2018**
(21) Application number: 10787067.7
(22) Date of filing: 24.11.2010
(51) Int. Cl.: B29C 45/43, F16K 15/06

(54) **PNEUMATIC VALVE DEVICE FOR EJECTING MOULDED ARTICLES OF PLASTIC MATERIAL FROM A MOULD**
PNEUMATIKVENTILVORRICHTUNG ZUM AUSSTOSSEN GEFORMTER KUNSTSTOFFARTIKEL AUS EINER FORM
DISPOSITIF DE SOUPAPE PNEUMATIQUE POUR ÉJECTION D'ARTICLES MOULÉS EN MATIÈRE PLASTIQUE DE MOULE

(30) Priority: 25.11.2009 IT MI20090380 U
(43) Date of publication of application: 03.08.2011
(73) Proprietor: ABATE BASILIO & C. S.N.C., 25011 Calcinato (IT)
(72) Inventor: ABATE, Davide, I-25011 Calcinato (IT)
(74) Representative: Coloberti, Luigi
(86) International application number: PCT/EP2010/068089
(87) International publication number: WO 2011/064234

(56) References cited:
- FR-A1- 2 793 864
- JP-A- 55 144 134

## Description

### BACKGROUND OF THE INVENTION

The present invention relates to an assembly of a mould and a pneumatic valve device suitable for feeding pressurised air jets into a cavity of a the mould for plastic materials; more particularly the invention relates to an assembly of a mould and a pressure-actuated valve device suitable for feeding air jets into a the cavity of a the mould in order to eject moulded articles.

### STATE OF THE ART

Pneumatic valve devices suitable for being connected to a pressurised air source are normally used for ejecting moulded articles of plastic material from the cavity of a mould, at the end of each moulding cycle.

Currently, use is made of two types of pneumatic valve device, in particular "static valves" and "dynamic valves"; these two types of valve devices have functional and structural limits, which negatively affect the operation of the mould, the manufacturing process and the quality of the moulded articles.

The valves of static type do not comprise any moving parts, since the pressurised air flow occurs through narrow slits obtained by coaxially arranging cylindrical bodies. The advantage of this type of valve device consists in preventing any infiltration of molten plastic material, and occlusion of the same valve device.

However, the static valves exhibit a number of drawbacks such as: reduced power of the air jet for ejecting the moulded articles, said reduced power being due to an excessive pressure drop of the air flow through the narrow slits of the valve. Furthermore, both the valve devices and the mould are required to be periodically disassembled, for the necessary cleaning operations; the quality of the moulded articles is sometime reduced by small plastic fins at the outlet slits of the air jets.

The dynamic valve devices comprise a closing valve member, movable within a seat in a valve body suitable to be connected to a pressurised air source; generally, the valve closing member comprises a conical head provided with a flat surface at the fore end, and is normally urged by a biasing spring towards a retracted closing position. Conversely, the movable valve member is urged into an advanced opening position by the same flow of pressurised air that is injected into the cavity of the mould. Dynamic valve devices of this type are disclosed, for example, in GB-A-1416080, US-A-6.443.421 and JP55144134 that represent the State of the Art closest to the present invention.

Although the valve devices of dynamic type enable, with respect to the static valves, the passage of a high flow of pressurised air that help the ejection of the moulded article, however, said valve devices of dynamic type exhibit hardly surmountable limits. The more relevant limit relates to the functionality of the same valve device; actually, problems may arise when the movable valve member, due to any failure of the biasing spring, or any failure of the actuators controlling the connection to the pressurised air source, stays in slightly open position. Consequently, the plastic material at the molten state injected into the mould cavity, irreparably penetrates into the valve device and the supply ducts for the pressurised air; consequently the valve device must be removed and the supplying ducts for the pressurised air must be cleaned with consequent prolonged and expensive stops for the production.

### OBJECTS OF THE INVENTION

The present invention is directed to improve this second type of valve devices, by providing a pneumatic valve device of dynamic type for feeding jets of pressurised air through an air flow path into the cavity of a mould, in order to eject a moulded article of plastic material, which valve device enables the drawbacks of the dynamic valve device of known type to be obviated.

In particular, an object of the invention is to provide an assembly of a mould and a pneumatic valve device of the above mentioned type, conformed to cause a preventive closure of the flow path following a short backward movement of a movable valve member to an intermediate position, by exploiting the movement of a mould member at the closure of the mould, before the injection of the molten plastic material takes place; thus, also in case of failure, the plastic material is prevented from penetrating the valve device, and a high flow rate of pressurised air is in any case assured.

A still further object of the invention is to provide an assembly of a mould and a pneumatic valve device of dynamic type, as previously referred to, that advantageously uses the thrust exerted by the same injected plastic material in order to urge the movable valve member from an intermediate closing position towards a fully retracted closing position.

A still further object of the invention is to provide an assembly of a mould for plastic materials, in combination with at least one pneumatic valve device for feeding air jets for ejecting moulded articles from the mould as previously referred to.

### SUMMARY OF THE INVENTION

These and further objects and advantages of the invention can be achieved by an assembly of a mould and a pneumatic valve device according to claim 1.

### BRIEF DESCRIPTION OF DRAWINGS

These and further features of the invention will better result from the following description, with reference to the example of the enclosed drawings, in which:
Figure 1 is a cross sectional detail of a generic mould for plastic materials, comprising a pneumatically actuated valve device according to the invention, in a closed condition of the mould, upon injection of a molten plastic material, and in a retracted position of the closing valve member of the valve device;
Figure 2 is a detail similar to figure 1, in an open condition of the mould, during the ejection of a moulded article, and in an advanced position of the closing valve member of the valve device;
Figure 3 is a detail similar to figure 1 in the closed condition of the mould, before the injection of the molten plastic material and in an intermediate closing position of the valve member of the valve device;
Figure 4 is an enlarged detail of figure 3;
Figure 5 is an enlarged detail showing a first step during the injection of the plastic material, in the case the movable valve member results locked in the intermediate closing position of figure 3;
Figure 6 is an enlarged detail similar to figure 5, in a subsequent injection step.

### DETAILED DESCRIPTION OF THE INVENTION

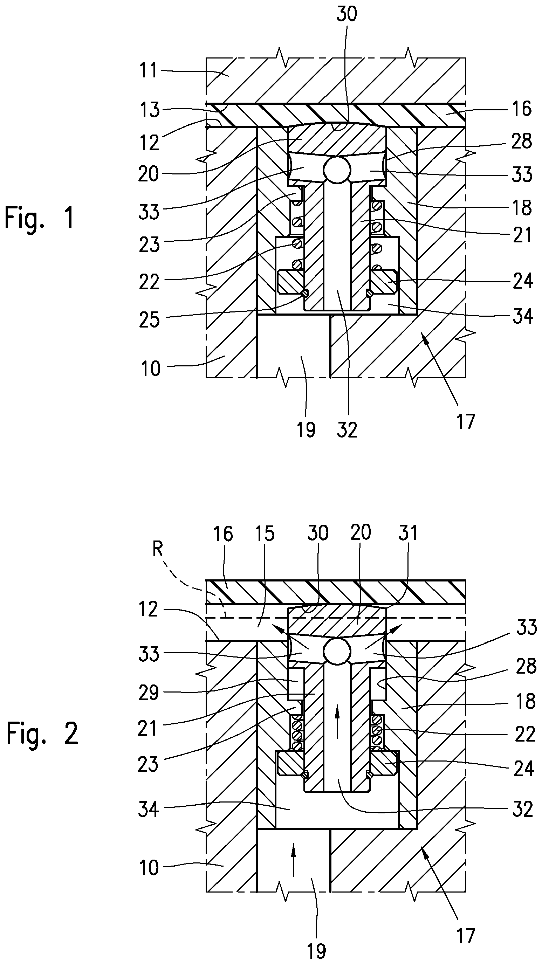

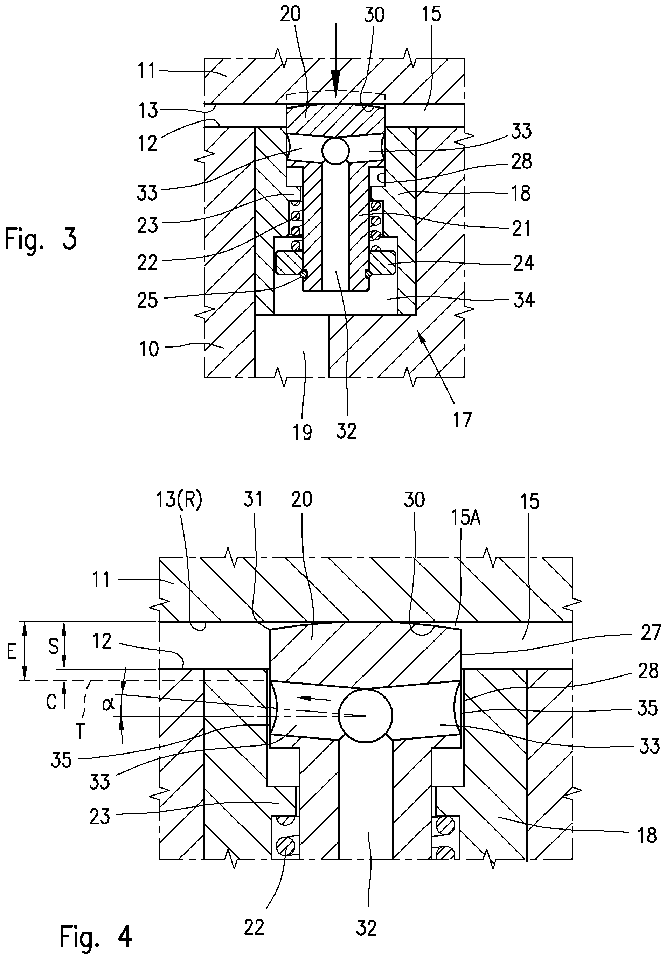

In figure 1, a portion of a generic mould for plastic materials is shown, said mould substantially comprising a first mould member 10 and a second mould member 11 having internal and mutually facing surfaces 12 and 13 defining a mould cavity 15, figure 3, into which a plastic material at the molten state is injected to perform a moulded article 16, in a per se known manner; in figure 1, the internal surfaces 12 and 13 of the two mould members 10 and 11 are shown in a form of flat surfaces, obviously however the internal surfaces of the two mould members 10, 11 can be anyway conformed, having a same or different shapes.

Still in figure 1, a pneumatically actuate valve device according to the invention is generally indicated by reference number 17, in which the valve device is conformed and arranged in the first mould member 10 in order to generate a jet of pressurised air, normally used for ejecting a moulded article 16 at the opening of the mould, for example by removing the second mould member 11, as shown in figure 2.

According to the present invention, the pneumatically actuated valve device 17 comprises a valve body 18 fitted into a housing seat of the mould member 10; the valve body 18 is provided with a through hole in fluid communication, through an air chamber 34, with an air feeding duct 19 of the mould 10, to be connected to a supplying system for pressurised air.

Inside the valve body 18 a movable valve closing element axially extends, said movable valve member comprising a head 20 having a rear stem 21. A compression spring 22 is positioned between an annular shoulder 23, inside the valve body 18, and a rest member 24 fastened to the stem 21 of the movable valve member by a retaining ring 25. The annular shoulder 23 of the valve body 18, besides retaining the bias spring 22, further defines an annular seat for the head 20 of the valve closing member 20, 21, as shown on the upper side of figure 1.

As schematically shown in figures 1, 2 and 4, the head 20 of the valve closing member is provided with a cylindrical side surface 27 that fits, with a slight clearance, the internal cylindrical surface 28 of an housing seat 29; the head 20 is also provided with a shaped front surface 30, slightly sloping towards a peripheral edge 31.

The fore surface 30 of the head 20, can be of any shape as long as suitable to provide an annular space 15A between opposite facing surfaces 13 and 30, of the mould member 11 and the head 20 of the same valve member respectively, around the peripheral edge 31 as shown in the enlarged detail of figure 4. For example, the front surface 30 of the valve head 20 can be in the shape of a rounded or spherical segment, a truncated cone, or can be anyway conformed as long as suitable for providing an annular throat 15A, preferably diverging towards the peripheral edge 31 of the head 20.

Still with reference to the figures, the stem 21 of the movable valve member is provided with an axial hole 32 that communicates with one or more transversal holes 33 that open on a side surface 27 of the head 20, provided in a rear position with respect to the peripheral edge 31.

The axial hole 32, at the rear end, opens towards an air feeding chamber 34 of the valve body 18, to be connected to a pressurised air source by the feeding duct 19 of the mould member 10.

Owing to the opposite action of the pressurised air flow and the bias spring 22, the valve member 20, 21 can be moved between a fully retracted position, corresponding to a normally closed condition of the valve device 17, shown in figure 1, and an advanced opening position, shown in figure 2 and with broken line in figure 3, in which the head 20 of the valve closing member protrudes into the cavity 15 of the mould to inject pressurised air, and in which the fore end surface 30 of the head 20 is beyond an ideal reference line R, coincident with the internal surface 13 of the mould member 11 in the closed condition of the mould as shown in figures 1 and 4.

Further features of the pneumatically valve device 17 are shown in the enlarged details of figures 3 and 4, in which the valve head 20 is positioned in an intermediate closing condition of the valve device 17, as a result of the closing movement of the mould.

In particular, figures 3 and 4 show two additional features that aid the moulded articles 16 to be ejected by pressurised air jets.

The first feature consists in a narrow annular slit 35 between opposite side surfaces 27 and 28, of the head 20 and the housing seat 29 of the valve body 18, respectively; the slit 35 extends from the transversal hole or holes 33 of the head 20 towards the peripheral edge 31 of the front surface 30; that can be achieved by acting on working tolerances of the two surfaces 27 and 28 so as to create a narrow slit for the exit of a laminar flow of pressurised air, as explained in the following.

The second additional feature consists in a transversal hole or holes 33 having their longitudinal axis slightly sloped towards the peripheral edge 31 at the forward end of the valve head 20, so as to form, with respect to a line orthogonal to the longitudinal axis of the hole 32, coincident with the sliding axis of the valve element, an angle a, for example equal to or smaller than 30°.

The operation of the pneumatic valve 17 and the assembly of the mould 10, 11 results as follows: in the case the valve device 17 regularly operates, with the mould closed before the injection step of the plastic material, and no reason exists for blocking the valve member 20, 21, the biasing spring 22 normally pushes the valve member 20, 21 in the fully retracted or resting position shown in figure 1 and figure 3. In the absence of pressurised air, the valve device 17 is normally closed; furthermore, in this fully retracted position of the valve member 20, 21, the peripheral edge 31 of the fore surface 30 of the head 20 is substantially flush to the internal surface 12 of the first mould member 10. The plastic material at a molten state can then be injected into the cavity 15 of the closed mould, and therein maintained until the moulded article 16 consolidates, as shown in figure 1.

After the required cooling time has elapsed, having the moulded article 16 to be ejected, the mould 10, 11 is opened for example by removing the upper-mould member 11. At first, in the absence of pressurised air, the movable valve member 20, 21 lies in the retracted condition of figure 1; in this condition, in a first supplying step of pressurised air, the passage takes place of a laminar flow of pressurised air through the annular slit 35 existing between the facing side surfaces of the head 20 and the housing seat 29. This first flow of pressurised air has the tendency to cause a detachment of the moulded article 16 from the surface of the mould cavity, with a result similar to the pneumatic valves of static type.

As the supply of pressurised air to the valve device 17 continues the air thrust prevails against the counteracting force of the biasing spring 22, raising the valve member 20, 21 in the fully advanced position of figure 2; in this condition, the transversal holes 33 open towards the mould cavity 15 enabling a strong jet of pressurised air to be generated allowing the moulded article 16 to be ejected. During this step, the inclination of the holes 33 enables air jets to be generated, properly oriented towards the mould cavity 15, so as to prevent sucking phenomena and a "Venturi" effect that would prevent the moulded article from being ejected.

In the fully advanced condition of the valve member 20, 21, as shown in the figure 2, the head 20 protrudes into the mould cavity, with the front shaped surface 30 beyond the reference line R.

When the moulded article 16 has been ejected, the supply of pressurised air to the valve 17 is interrupted, and the movable valve member 20, 21, urged by the previously elastically loaded spring 22, is automatically moved back to the fully retracted or resting position, shown in figure 1, enabling thus a new article 16 to be moulded.

In the event that, due to any failure of the valve device 17 or the pressurised air supplying system, the movable valve member 20, 21, before the closure of the mould, stays in the advanced position of figure 2, with the front surface 30 of the head 20 beyond the reference line R, when the mould is subsequently closed the internal surface 13 of the second mould member 11, coming into contact with the front surface 30 of the valve head 20, pushes back said valve member into the intermediate closing position shown in figures 3 and 4, in which the transversal exit holes 33 for the air jets are retracted with respect to the internal surface 12 of the first mould member 10, inside the housing set. In this intermediate closing position of the valve member 20, 21, the transversal exit holes 33 for the air jets are closed with respect to the mould cavity 15, in consideration of that the transversal holes 33 are provided on the side surface of the head 20, beneath a reference line T which is spaced from the peripheral edge 31 of the front rounded surface 30 of the valve head 20, for a length greater than the local depth of the mould cavity 15, or the same moulded article 16, according to the formula E = S + C wherein "S" is the local depth of the mould cavity 15, or the thickness of the article 16, and "C" is an additional safety dimension, defined during the designing of the mould 10, 11 and the pneumatic valve device 17. The dimensioning of the valve device 17 arises thus from the features of the mould, and generally "E" must always be greater than "S", with "C" indicatively of one or some millimetres in order to form a tight closure, required for preventing the plastic material from infiltrating the valve device 17, when said plastic material is injected into the mould.

In a conventional pneumatic valve, if the valve closing member remains in a raised or advanced position, in which said valve closing member partially or fully protrudes into the mould cavity, said valve closing member would give rise to imperfections in the moulded articles 16, that consequently would have to be discarded; furthermore the molten plastic material would penetrate the valve device, whereby measures would have to be taken in order to substitute said pneumatic valve and remove the causes of failure.

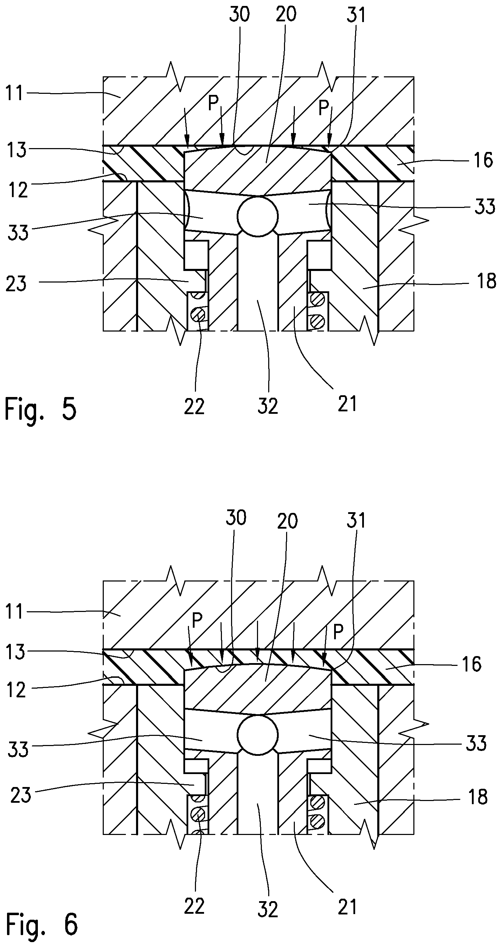

On the contrary, with a pneumatic valve device 17, in a mould assembly according to the invention, owing to the particular rounded, conical or more in general shaped conformation of the front surface 30 of the head 20 of the movable valve member, as well as the consequent formation of the annular space 15A, in case of failure, the thrust of the mould member 11 is initially exploited for bringing the valve head 20 in the intermediate closing position of figure 3; then the thrust P, generated by the pressure of the same injected plastic material penetrating the annular space 15A between the opposite surfaces 30 and 13, of the valve head 20 and the mould member 11, as shown in figures 5 and 6, is exploited in order to fully retract the valve head 20 into the housing seat 29, the valve head 20 being thus brought back into the fully retracted position.

As a result and as shown in the enclosed drawings, an improved type of pneumatic valve of dynamic type is then provided in order to generate pressurised air jets, for ejecting moulded articles from moulds for plastic materials; furthermore an assembly is provided comprising a mould for plastic materials and one or more pneumatic valves according to the invention, whereby the desired results are achieved.

Consequently, other modifications and/or variations can be brought to the valve 17 or parts thereof, and to the mould 10, 11, without thereby departing from the claims.

## Claims

1. An assembly of a mould (10, 11) for plastic materials, and at least one pressure-actuated pneumatic device (17), in which the mould (10, 11) comprises a first mould member (10) and a second movable mould member (11) having internal facing surfaces (12, 13) defining a cavity (15) of the mould (10, 11);
in which the first one (11) of said mould members (10, 11) comprises said at least one pressure-actuated pneumatic valve device (17) suitable to be connected to a pressurised air source, to generate an air jet in the cavity (15) of the mould (10, 11) for ejecting a moulded article;
in which the pneumatic valve device (17) comprises:
a valve body (18) configured with a seat (29) for housing a movable valve member (20, 21);
the valve member (20, 21) in said housing seat being axially movable between an advanced opening position and a fully retracted closing position of the pneumatic valve device (17);
the valve member (20, 21) comprising a valve head (20) provided with a side surface (27) and a front shaped surface (30) having a peripheral edge (31), and a rearwardly extending stem (21);
a biasing spring (22) to urge the valve member (20, 21) in the fully retracted closing position; and
conduit means for supplying by the pneumatic valve device (17) in the mould cavity (15) a flow of pressurised air in the advanced opening position of the valve member (20, 21),
the head (20) of the valve member (20, 21) comprising a front shaped surface (30) configured to provide an annular space (15A) with the internal facing surface (13) of the movable member (11) of the mould, along said peripheral edge (31);
**characterised by** comprising:
an air feeding chamber (34) and a flow path (32, 33) for the pressurised air in the movable valve member (20, 21), extending from a rear end of the stem (21) to at least one transversal air exit hole (33) opening on the side surface (27) of the valve head (20), the space between the at least one transversal air exit hole (33) of the air flow path (32, 33) and the peripheral edge (31) of the front shaped surface (30) of the valve member (20, 21) being greater than a local depth of the cavity (15) of the mould, to close the air flow path (32, 33) in an intermediate retracted position of the valve member (20, 21) when urged by the movable mould member (11) at the closure of the mould.

2. The assembly according to claim 1, **characterised in that**, the valve head (20) of the valve member (20, 21) comprises a plurality of transversal air exit holes (33) for ejecting jets of pressurised air, said plurality of transversal holes (33) being in fluid communication with a central hole (32) which axially extends in the stem (21) of the valve member (20, 21) opening into the air feeding chamber (34) of the body (18) of the valve device (17).

3. The assembly according to claim 1 or 2, **characterised in that** the at least one transversal air exit hole or each transversal air exit hole (33) is rearwardly sloping by an angle (a) towards the peripheral edge (31) of the fore surface (30) of the valve member (20, 21).

4. The assembly according to claim 1, **characterised in that** the front shaped surface (30) of the valve head (20) comprises a spherical segment.

5. The assembly according to claim 1, **characterised in that** the front shaped surface (30) of the valve head (20) comprises a conical surface.

6. The assembly according to claim 1, **characterised in that** the front shaped surface (30) of the valve head (20) is conformed to provide with the facing internal surface (13) of the second member (11) of the mould (10, 11), a side open annular space (15A) diverging towards the peripheral edge (31) of the front shaped surface (30) of the valve head (20).

## Patentansprüche

1. Anordnung einer Form (10, 11) für Kunststoffmaterialien und zumindest eine druckbetätigte pneumatische Vorrichtung (17), wobei die Form (10, 11) ein erstes Formteil (10) und ein zweites bewegliches Formteil (11) mit nach innen gerichteten Oberflächen (12, 13), die einen Hohlraum (15) der Form (10, 11) definieren, umfasst;
wobei das erste (11) der Formteile (10, 11) die zumindest eine druckbetätigte pneumatische Ventilvorrichtung (17) umfasst, die geeignet ist, um mit einer Druckluftquelle verbunden zu werden, um einen Luftstrahl in dem Hohlraum (15) der Form (10, 11) zum Ausstoßen eines Formteils zu erzeugen;
wobei die pneumatische Ventilvorrichtung (17) umfasst:
einen Ventilkörper (18), der mit einem Sitz (29) zum Aufnehmen eines beweglichen Ventilelements (20, 21) konfiguriert ist;
wobei das Ventilelement (20, 21) in dem Gehäusesitz zwischen einer vorgeschobenen Öffnungsposition und einer vollständig zurückgezogenen Schließposition der pneumatischen Ventilvorrichtung (17) axial beweglich ist;
wobei das Ventilelement (20, 21) einen Ventilkopf (20), der mit einer Seitenfläche (27) und einer geformten Vorderfläche (30) mit einer Umfangskante (31) versehen ist, und einen sich nach hinten erstreckenden Schaft (21) umfasst;
eine Vorspannfeder (22), um das Ventilelement (20, 21) in die vollständig zurückgezogene Position zu drängen; und
Leitungsmittel, um durch die pneumatische Ventilvorrichtung (17) in der vorgeschobenen Öffnungsposition des Ventilelements (20, 21) einen Strom von Druckluft in den Formhohlraum (15) zu führen,
wobei der Kopf (20) des Ventilelements (20, 21) eine geformte Vorderfläche (30) umfasst, die konfiguriert ist, um einen ringförmigen Raum (15A) mit der nach innen gerichteten Oberfläche (13) des beweglichen Teils (11) der Form entlang der Umfangskante (31) bereitzustellen;
**gekennzeichnet, durch** Umfassen
einer Luftzufuhrkammer (34) und eines Strömungswegs (32, 33) für die Druckluft in dem beweglichen Ventilelement (20, 21), der sich von einem hinteren Ende des Schafts (21) zum zumindest einem transversalen Luftaustrittsloch (33) erstreckt, das sich auf der Seitenfläche (27) des Ventilkopfes (20) öffnet, wobei der Raum zwischen dem zumindest einem transversalen Luftaustrittsloch (33) des Strömungswegs (32, 33) und der Umfangskante (31) der geformten Vorderfläche (30) des Ventilelements (20, 21) größer als eine örtliche Tiefe des Hohlraums (15) der Form ist, um den Strömungsweg (32, 33) in einer mittleren zurückgezogenen Position des Ventilelements (20, 21) zu schließen, wenn von dem beweglichen Formteil (11) bei dem Schließen der Form gedrängt.

2. Anordnung nach Anspruch 1, **dadurch gekennzeichnet, dass** der Ventilkopf (20) des Ventilelements (20, 21) eine Mehrzahl von transversalen Luftaustrittslöchern (33) zum Ausstoßen von Druckluftstrahlen umfasst, wobei die Mehrzahl von transversalen Löchern (33) in Fluidverbindung mit einem zentralen Loch (32) ist, das sich axial von dem Schaft (21) des Ventilelements (20, 21) erstreckt und sich in die Luftzufuhrkammer (34) des Körpers (18) der Ventilvorrichtung (17) öffnet.

3. Anordnung nach Anspruch 1 oder 2, **dadurch gekennzeichnet, dass** das zumindest eine transversale Luftaustrittsloch oder jedes transversale Luftaustrittsloch (33) um einen Winkel (a) zu der Umfangskante (31) der Vorderfläche (30) des Ventilelements (20, 21) hin nach hinten geneigt ist.

4. Anordnung nach Anspruch 1, **dadurch gekennzeichnet, dass** die geformte Vorderfläche (30) des Ventilkopfes (20) ein Kugelsegment umfasst.

5. Anordnung nach Anspruch 1, **dadurch gekennzeichnet, dass** die geformte Vorderfläche (30) des Ventilkopfes (20) eine konische Oberfläche umfasst.

6. Anordnung nach Anspruch 1, **dadurch gekennzeichnet, dass** die geformte Vorderfläche (30) des Ventilkopfes (20) ausgebildet ist, um mit der nach innen gerichteten Oberfläche (13) des zweiten Teils (11) der Form (10, 11) einen an einer Seite offenen ringförmigen Raum (15A) bereitzustellen, der zu der Umfangskante (31) der geformten Vorderfläche (30) des Ventilkopfes (20) hin divergiert.

## Revendications

1. Ensemble d'un moule (10, 11) pour des matériaux plastiques, et au moins un dispositif pneumatique actionné par pression (17), dans lequel le moule (10, 11) comprend un premier élément de moule (10) et un second élément de moule mobile (11) présentant des surfaces opposées internes (12, 13) définissant une cavité (15) du moule (10, 11) ;
dans lequel le premier (11) desdits éléments de moule (10, 11) comprend ledit au moins un dispositif de soupape pneumatique actionné par pression (17) adapté pour être raccordé à une source d'air pressurisé, pour générer un jet d'air dans la cavité (15) du moule (10, 11) destiné à éjecter un article moulé ;
dans lequel le dispositif de soupape pneumatique (17) comprend :
un corps de soupape (18) configuré avec un siège (29) pour loger un élément de soupape mobile (20, 21) ;
l'élément de soupape (20, 21) dans ledit siège de logement étant axialement mobile entre une position d'ouverture avancée et une position de fermeture pleinement rétractée du dispositif de soupape pneumatique (17) ;
l'élément de soupape (20, 21) comprenant une tête de soupape (20) dotée d'une surface latérale (27) et d'une surface formée avant (30) présentant une arête périphérique (31), et une tige s'étendant vers l'arrière (21) ;
un ressort d'inclinaison (22) pour pousser l'élément de soupape (20, 21) dans la position de fermeture pleinement rétractée ; et
un moyen de conduit pour alimenter par le dispositif de soupape pneumatique (17) dans la cavité de moule (15) un flux d'air pressurisé dans la position d'ouverture avancée de l'élément de soupape (20, 21),
la tête (20) de l'élément de soupape (20, 21) comprenant une surface formée avant (30) configurée pour doter un espace annulaire (15A) de la surface opposée interne (13) de l'élément mobile (11) du moule, le long de ladite arête périphérique (31) ;
**caractérisé en ce qu'**il comprend :
une chambre d'amenée d'air (34) et une voie de flux (32, 33) pour l'air pressurisé dans l'élément de soupape mobile (20, 21), s'étendant depuis une extrémité arrière de la tige (21) à au moins un trou de sortie d'air transversal (33) ouvrant sur la surface latérale (27) de la tête de soupape (20), l'espace entre l'au moins un trou de sortie d'air transversal (33) de la voie de flux d'air (32, 33) et l'arête périphérique (31) de la surface formée avant (30) de l'élément de soupape (20, 21) étant supérieur à une profondeur locale de la cavité (15) du moule, pour fermer la voie de flux d'air (32, 33) dans une position rétractée intermédiaire de l'élément de soupape (20, 21) lorsqu'il est poussé par l'élément de moule mobile (11) à la fermeture du moule.

2. Ensemble selon la revendication 1, **caractérisé en ce que**, la tête de soupape (20) de l'élément de soupape (20, 21) comprend une pluralité de trous de sortie d'air transversaux (33) pour éjecter des jets d'air pressurisé, ladite pluralité de trous transversaux (33) étant en communication fluidique avec un trou central (32) qui s'étend axialement dans la tige (21) de l'élément de soupape (20, 21) ouvrant dans la chambre d'amenée d'air (34) du corps (18) du dispositif de soupape (17).

3. Ensemble selon la revendication 1 ou 2, **caractérisé en ce que** l'au moins un trou de sortie d'air transversal ou chaque trou de sortie d'air transversal (33) est incliné vers l'arrière d'un angle (a) vers l'arête périphérique (31) de la surface avant (30) de l'élément de soupape (20, 21).

4. Ensemble selon la revendication 1, **caractérisé en ce que** la surface formée avant (30) de la tête de soupape (20) comprend un segment sphérique.

5. Ensemble selon la revendication 1, **caractérisé en ce que** la surface formée avant (30) de la tête de soupape (20) comprend une surface conique.

6. Ensemble selon la revendication 1, **caractérisé en ce que** la surface formée avant (30) de la tête de soupape (20) est conformée pour doter de la surface interne opposée (13) du second élément (11) du moule (10, 11), un espace annulaire ouvert latéral (15A) divergeant vers l'arête périphérique (31) de la surface formée avant (30) de la tête de soupape (20).
